(19) Europäisches Patentamt
European Patent Office
Office européen des brevets

(11) **EP 0 560 023 B1**

(12) **EUROPÄISCHE PATENTSCHRIFT**

(45) Veröffentlichungstag und Bekanntmachung des Hinweises auf die Patenterteilung:
**17.06.1998 Patentblatt 1998/25**

(51) Int Cl.⁶: **G07D 7/00**, G06K 9/52

(21) Anmeldenummer: **93100829.6**

(22) Anmeldetag: **21.01.1993**

(54) **Einrichtung zur Klassifizierung eines Musters, insbesondere von einer Banknote oder von einer Münze**

Device for the classification of a pattern, particularly from a currency note or a coin

Dispositif pour la classification d'une forme, en particulier d'un billet de banque ou d'une pièce de monnaie

(84) Benannte Vertragsstaaten:
**CH DE ES FR GB IT LI NL SE**

(30) Priorität: **10.03.1992 CH 753/92**

(43) Veröffentlichungstag der Anmeldung:
**15.09.1993 Patentblatt 1993/37**

(73) Patentinhaber: **MARS INCORPORATED**
**McLean Virginia 22101-3885 (US)**

(72) Erfinder:
• **Baudat, Gaston**
**CH-1202 Genève (CH)**
• **Voser, Christian**
**CH-1213 Genève (CH)**

(74) Vertreter: **Burke, Steven David et al**
**R.G.C. Jenkins & Co.**
**26 Caxton Street**
**London SW1H 0RJ (GB)**

(56) Entgegenhaltungen:
EP-A- 0 056 116    EP-A- 0 294 497

**Beschreibung**

Die Erfindung bezieht sich auf eine Einrichtung zur Klassifizierung eines Musters, insbesondere von einer Banknote oder von einer Münze, der im Oberbegriff des Anspruchs 1 genannten Art.

Solche Einrichtungen werden vorteilhaft in Verkaufsautomaten, Geldwechselautomaten und dergleichen mehr verwendet, wo einerseits nach dem Wert, beispielsweise zwischen Ein-, Zwei- und Fünf-Dollar-Noten, und/oder anderseits zwischen Originalen und Kopien (Fälschungen) klassifiziert wird.

Es ist bekannt, Intensitätswerte einer von Bildpartien eines Prüflings reflektierten elektomagnetischen Strahlung so aufzubereiten, dass der Prüfling mit einer Pixelmatrix (EP 0 067 898 B1) eines Originals verglichen werden kann, oder dass Unterschiede zu einem Original in Form eines Winkels zwischen zwei n-dimensionalen Vektoren (DE 30 40 963 A1) oder als Kreuzkorrelationsfunktion (EP 0 084 137 A2) ausgedrückt und ausgewertet werden.

Es ist auch bekannt (CH 640 433 A5), verschiedene physikalische Messgrössen eines Prüflings mit entsprechenden gespeicherten Grenzwerten jeweils im wesentlichen unabhängig voneinander zu vergleichen und nach einer erfolgreichen Klassifizierung die Grenzwerte mit Hilfe der Messgrössen des akzeptierten Prüflings zu verbessern.

Es sind im weiteren verschiedene Ansätze für lernende Klassifikatoren bekannt (H. Niemann: Klassifikation von Mustern - Berlin, Heidelberg, Berlin, Tokyo: Springer 1983), bei denen die Klassenbereiche mit klassifizierten Mustern laufend verändert werden und die bei der Klassifikation einen erheblichen Rechenaufwand erfordern, was bei praktischem Einsatz zu unannehmbaren Antwortzeiten führen kann.

EP-A-0 294 497 offenbart ein Verfahren zur Identifizierung von Briefmarken, bei dem ein Vektor gewonnen wird, der gemessene Eigenschaften einer zu identifizierenden Briefmarke wiedergibt, dann jeweils der Mahalanobis-Abstand zwischen diesem Vektor und einzelnen Sollvektoren gemessen wird, die jeweils eine entsprechende bekannte Briefmarke repräsentieren, und schließlich die gemessenen Abstände mit entsprechenden vorbestimmten Werten verglichen werden, um die Briefmarke zu identifizieren.

Der Erfindung liegt die Aufgabe zugrunde, eine Einrichtung der im Oberbegriff des Anspruchs 1 genannten Art derart aufzubauen, dass ein Muster kostengünstig und innerhalb annehmbarer Antwort zeit mit gewünschter Sicherheit klassifiziert werden kann.

Die Erfindung ist im unabhängigen Anspruch gekennzeichnet. Weiterbildungen der Erfindung ergeben sich aus den abhängigen Ansprüchen.

Nachfolgend wird ein Ausführungsbeispiel der Erfindung anhand der Zeichnung näher erläutert.

Es zeigen:

Fig. 1     ein Blockschaltbild einer Einrichtung zur Klassifizierung eines Musters,

Fig. 2     ein Datenfluss-Diagramm eines Klassifizierungssystems für Banknoten,

Fig. 3     eine Sensorgruppe zur Merkmalgewinnung in einem Aufnahmesystem und

Fig. 4     ein Ablauf-Diagramm der wichtigsten Operationen bei der Klassifizierung.

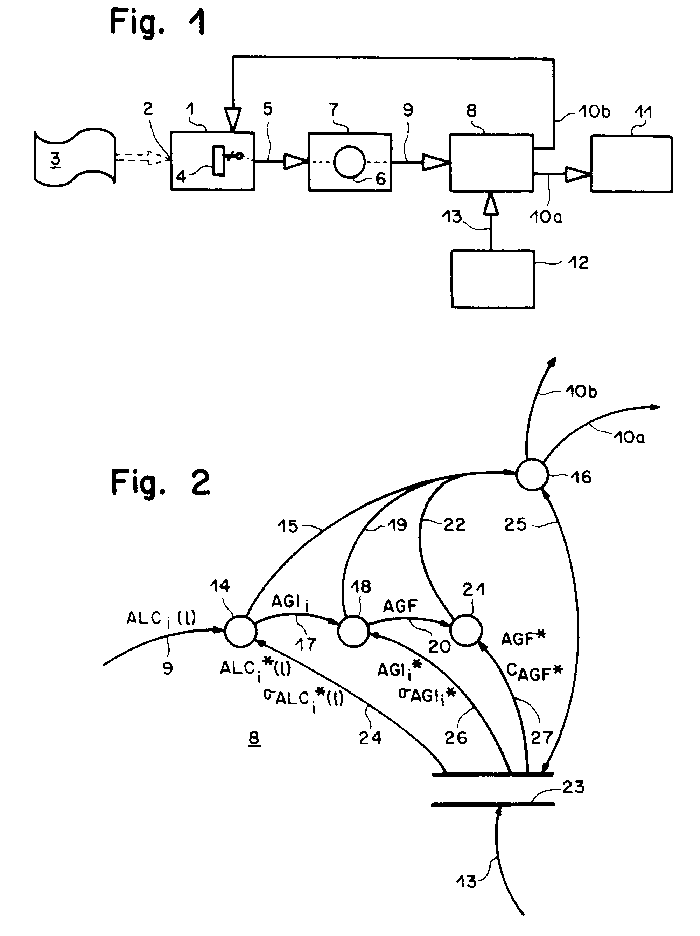

In der Fig. 1 bedeutet 1 ein Aufnahmesystem, welches im wesentlichen einen Einlass 2 und ein_nicht gezeichnetes Transportsystem für einen Prüfling 3 sowie eine Sensorgruppe 4 aufweist, mit der ein Muster des Prüflings 3 gemessen wird. Das Aufnahmesystem 1 ist durch einen Merkmalkanal 5 an einem mindestens eine Vorverarbeitungs-Aktivität 6 aufweisenden Vorverarbeitungssystem 7 angeschlossen. Ein lernendes Klassifizierungssystem 8 ist über einen Eingangskanal 9 mit dem Vorverarbeitungssystem 7 und über einen ersten Ausgangskanal 10a mit einem Dienstleistungssystem 11 verbunden. Das Aufnahmesystem 1, das Vorverarbeitungssystem 7, das Klassifizierungssystem 8 und das Dienstleistungssystem 11 sind also über Kanäle im wesentlichen zu einer Kaskade geschaltet, die durch das Dienstleistungssystem 11 abgeschlossen ist.

Es ist möglich, dass ein Initialisierungssystem 12 über einen Initialisierungskanal 13 mit dem Klassifizierungssystem 8 verbunden ist.

Die Fig. 2 zeigt den prinzipiellen Aufbau des Klassifizierungssystems 8 anhand eines Datenflussdiagrammes. In der gewählten, aus der Literatur bekannten Darstellungsart (D. J. Hatley, I. A. Pirbhai: Strategies for Real-Time System Specification, Dorset House, NY 1988) bedeutet ein Kreis eine Aktivität (activity), ein Pfeil einen Kommunikationskanal (channel) zur Übertragung von Daten und/oder Ereignissen, wobei die Pfeilspitze in die wesentliche Datenflussrichtung zeigt. Ein Datenspeicher (pool), der allgemein mehreren Aktivitäten zur Verfügung steht, ist durch zwei gleich lange, parallele Linien dargestellt. Im weiteren ist beispielsweise eine Anordnung aus zwei durch einen Kommunikationskanal verbundene Aktivitäten mit einer einzigen Aktivität, welche alle Aufgaben der beiden Aktivitäten erfüllt, äquivalent.

Jede Aktivität wird in bekannter Art als eine elektronische Schaltung oder softwaremässig als ein Prozess, ein Programmstück oder als eine Routine gebaut.

Der Eingangskanal 9 führt zu einer ersten Aktivität 14, welche über einen ersten Kanal 15 mit einer zweiten Aktivität 16 und über einen zweiten Kanal 17 mit einer dritten Aktivität 18 verbunden ist, die ihrerseits über einen dritten Kanal 19 mit der zweiten Aktivität 16 und über einen vierten Kanal 20 mit einer vierten Aktivität 21 verknüpft ist, von der aus ein fünfter Kanal 22 zur zweiten Aktivität 16 führt, welche am Ausgangskanal 10a angeschlossen ist. Ein Datenspeicher 23, der eine Datenbasis des Klassifizierungssystems 8 enthält, ist über einen sechsten Kanal 24 mit der ersten Aktivität 14, über einen siebten Kanal 25 mit der zweiten Aktivität 16, über einen achten Kanal 26 mit der dritten Aktivität 18, über einen neunten Kanal 27 mit der vierten Aktivität 21 und mit dem Initialisierungskanal 13 verbunden.

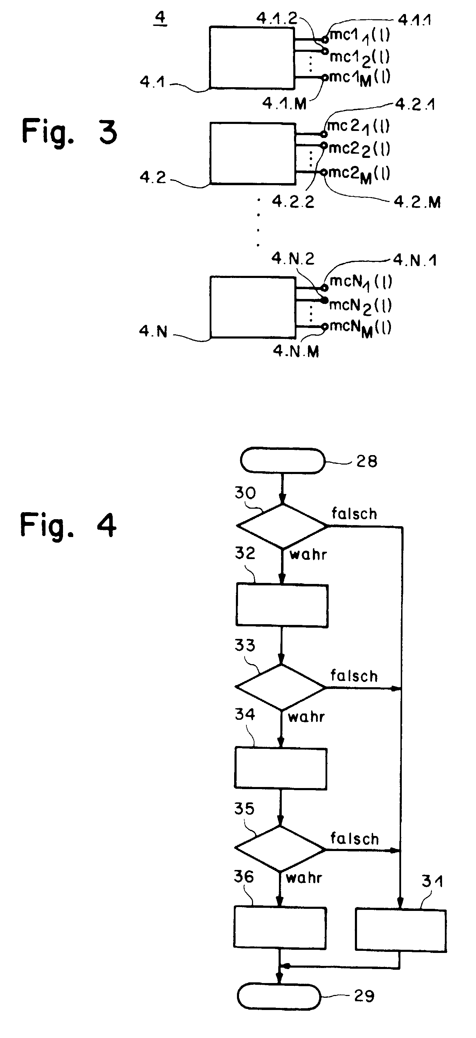

In der Fig. 3 weist ein Sensor 4.1, 4.2 bis 4.N der aus einer Anzahl N Sensoren bestehenden Sensorgruppe 4 eine Anzahl M Merkmalausgänge 4.1.1, 4.1.2 bis 4.1.M bzw. 4.2.1, 4.2.2 bis 4.2.M bzw. 4.N.1, 4.N.2 bis 4.N.M auf. Die Anzahl N sowie die Anzahl M sind voneinander unabhängig und frei wählbar. Beispielsweise sind die Anzahl N und die Anzahl M drei.

Der Prüfling 3 - im Beispiel eine Banknote - wird am Einlass 2 (Fig. 1) dem Transportsystem übergeben, das den Prüfling 3 zwecks einer Messwertaufnahme an der Sensorgruppe 4 vorbeiführt, welche das Muster des Prüflings 3 in bekannter Art zu diskreten Zeitpunkten 1 misst. Mit Vorteil sind die Sensoren 4.1 bis 4.N parallel zur Transportebene des Prüflings 3 und senkrecht zu dessen Transportrichtung nebeneinander angeordnet, so dass eine Anzahl N paralleler Spuren des Prüflings 3 messbar sind, wobei jeder der Sensoren 4.1 bis 4.N jeweils M verschiedene Merkmale misst. Als Muster gilt die Gesamtheit der Werte mc(l) mindestens einer Reihe von einem physikalischen Merkmal des Prüflings 3. Im Beispiel besteht das Muster aus der Anzahl N Reihen mit je einer Anzahl L Werten, wobei jede Reihe die Anzahl M Merkmale umfasst. Die Anzahl L für die beobachtete Länge des Prüflings ist durch die für die Messung gewählte Abtastrate mit den Zeitpunkten l und die gewählte Geschwindigkeit des Prüflings 3 im Transportsystem gegeben und beträgt im Beispiel dreizehn oder vierundzwanzig.

An jedem Sensor 4.1 bzw. 4.2 bzw. 4.N (Fig. 3) sind zu den Zeitpunkten 1 die Werte der Merkmale als Vektoren mc1(l) bzw. mc2(l) bzw. mcN(l) an den Merkmalausgängen 4.1.1 bis 4.1.M bzw. 4.2.1 bis 4.2.M bzw. 4.N.1 bis 4.N.M verfügbar. Die Zeitpunkte 1 sind von 1 bis L numeriert.

Ist der Prüfling eine Lit- oder eine US$-Note, misst der Sensor 4.1 bzw. 4.2 bzw. 4.N für eine sichere Klassifizierung mit Vorteil die Intensitätswerte einer von Bildpartien des mit mindestens einer Lichtquelle angestrahlten Prüflings reflektierten elektromagnetischen Strahlung zu jedem Zeitpunkt l - bzw. an der Position 1 des Prüflings bezogen auf die Sensorgruppe 4 - in den drei Spektralbereichen Grün, Rot und Infrarot. Damit liegen beispielsweise Intensitätwerte von Grün an den Merkmalausgängen 4.1.1, 4.2.1 und 4.N.1 sowie Intensitätswerte von Rot an den Merkmalausgängen 4.1.2, 4.2.2 und 4.N.2 und von Infrarot an den Merkmalausgängen 4.1.3, 4.2.3 und 4.N.3.

Auf Wunsch kann die Sensorgruppe 4 auch andere - beispielsweise magnetische oder akustische - Sensoren aufweisen. Falls eine Münze geprüft wird, kann ihr Muster auch aus den Schallpegeln ausgesuchter Frequenzen (anstelle der Positionen 1) des Klangspektrums sein, welches sich bei einem Aufprall der Münze ergibt.

Die zu den Zeitpunkten l (l=1..L) vom Sensor 4.1 bzw. 4.2 bzw. 4.N erfassten Werte der physikalischen Merkmale sind zur weiteren Verarbeitung als ein gemessener Vektor mc1(l) bzw. mc2(l) bzw. mcN(l) gruppiert. Dabei weist jeder der gemessenen Vektoren die Anzahl M Komponenten auf, bzw. die Dimension der gemessenen Vektoren mci(l) ist M. Damit sind die gemessenen Vektoren wie folgt definiert:

$$( \, mci(l) \, )^T = ( \, mci_1(l), \, mci_2(l) \, .. \, mci_M(l) \, ) \tag{G1}$$

mit i=1..N und l=1..L.

Einer bequemeren Darstellung wegen wird in der Definition (G1) der gemessene Vektor mci(l) transponiert, d. h. als Zeilenvektor geschrieben. Der hochgestellte Buchstabe T beim Namen eines Vektors weist in der Definition (G1) wie auch im folgenden auf eine transponierte Darstellung des Vektors hin.

Die gemessenen Vektoren mci(l) werden vom Aufnahmesystem 1 (Fig. 1) über den Merkmalkanal 5 dem Vorverarbeitungssystem 7 übergeben, worauf die Vorverarbeitungsaktivität 6 aus den gemessenen Vektoren mci(l) durch Transformationen Fi lokale Merkmalvektoren ALCi(l) bildet. Eine Transformation Fi ist linear oder nicht linear. Die Dimension K der lokalen Merkmalvektoren ALCi(l) ist gleich oder verschieden von der Dimension M der gemessenen Vektoren mci(l). Es gilt:

$$ALCi(l) = Fi\{ \, mci(l) \, \}, \tag{G2}$$

wobei i=1..N

$$( \text{ALCi(l)} )^T = ( \text{ALCi}_1(l), \text{ALCi}_2(l), .. \text{ALCi}_K(l) ) \tag{G3}$$

wobei K=M oder K<>M

Zugunsten einer bequemeren Darstellung wird in der Definition (G3) der lokale Merkmalvektor ALCi(l) transponiert, d. h. als Zeilenvektor geschrieben.

Eine der Transformationen Fi ist beispielsweise eine Normalisierung eines Spektralbereichs und kann für die erste Komponente von ALC2(l) lauten:

$$\text{ALC2}_1(l) \;=\; \frac{\text{mc2}_1(l)}{\displaystyle\sum_{j=1}^{M} \text{mc2}_j(l)} \tag{G4}$$

Wenn der Prüfling 3 z. B. eine Lit- oder US\$-Note ist und jeder der gemessenen Vektoren mci(l) eine Komponente für den Spektralbereich Grün, eine für den Spektralbereich Rot und eine für den Spektralbereich Infrarot aufweist, wobei beispielsweise den ersten Komponenten $\text{mci}_1(l)$ ein Intensitätswert des Spektralbereichs Grün, den zweiten Komponenten $\text{mci}_2(l)$ ein Intensitätswert des Spektralbereichs Rot und den dritten Komponenten $\text{mci}_3(l)$ ein Intensitätswert des Spektralbereichs Infrarot zugeordnet ist, so werden die gemessenen Vektoren mci(l) für eine sichere Klassifizierung mit Vorteil wie folgt in lokale Merkmalvektoren ALCi(l) transformiert:

Eine Komponente, z. B. diejenige mit dem Index eins, jedes lokalen Merkmalvektors ALCi(l) enthält die Helligkeit des Sensors 4.i, für i im Bereich von 1..N, zum Zeitpunkt l, für l im Bereich von 1..L, als Summe aller Intensitätswerte der gemessenen Spektren:

$$\text{ALCi}_1(l) = \text{mci}_1(l) + \text{mci}_2(l) + \text{mci}_3(l) \tag{G5}$$

Eine weitere Komponente, z. B. diejenige mit dem Index zwei, enthält den normalisierten Intensitätswert des Spektralbereichs Grün des Sensors 4.i zum Zeitpunkt 1:

$$\text{ALCi}_2(l) = \frac{\text{mci}_1(l)}{\text{mci}_1(l) + \text{mci}_2(l) + \text{mci}_3(l)} \tag{G6}$$

Eine dritte Komponente, z. B. diejenige mit dem Index drei, enthält den normalisierten Intensitätswert des Spektralbereichs Rot des Sensors 4.i zum Zeitpunkt 1:

$$\text{ALCi}_3(l) = \frac{\text{mci}_2(l)}{\text{mci}_1(l) + \text{mci}_2(l) + \text{mci}_3(l)} \tag{G7}$$

Eine vierte Komponente, z. B. diejenige mit dem Index vier, enthält den über die Spur des Sensors 4.i normalisierten Intensitätswert des Spektralbereichs Grün zum Zeitpunkt 1:

$$ALCi_4(l) = \frac{mci_1(l)}{\dfrac{1}{L} \cdot \sum\limits_{j=1}^{L} mci_1(j)} \qquad (G8)$$

Eine fünfte Komponente, z. B. diejenige mit dem Index fünf, enthält den über die Spur des Sensors 4.i normalisierten Intensitätswert des Spektralbereichs Infrarot zum Zeitpunkt 1:

$$ALCi_5(l) = \frac{mci_3(l)}{\dfrac{1}{L} \cdot \sum\limits_{j=1}^{L} mci_3(j)} \qquad (G9)$$

Die Gesamtheit der lokalen Merkmalvektoren ALCi(l) - das sind N·L Vektoren - werden vom Vorverarbeitungssystem 7 über den Eingangskanal 9 dem Klassifizierungssystem 8 übermittelt, welches die Klassifizierung des Prüflings 3 mit Hilfe von mehreren Prüfungen und weiteren Transformationen vornimmt.

In der folgenden Beschreibung der Funktionsweise des Klassifizierungssystems 8 wird von einem Spezialfall ausgegangen, in welchem geprüft wird, ob der Prüfling 3 zu genau einer bestimmten Zielklasse gehört oder nicht. Alle hier interessierenden Klassifizierungsprobleme sind in Einzelfälle aufteilbar, bei denen der Prüfling 3 jeweils mit genau einer Zielklasse überprüft wird, was dem beschriebenen Spezialfall entspricht. Die beschriebene Klassifizierung wird dabei bei Bedarf für jede der möglichen Zielklassen durchgeführt, was in bekannter Art von einem einzigen Klassifizierungssystem 8 in einer Schleife (loop) oder, falls das Klassifizierungssystem 8 mehrere Instanzen aufweist, gleichzeitig parallel (concurrent) ausführbar ist, wobei die Überprüfung sofort abgebrochen werden kann, wenn die Klasse des Prüflings 3 feststeht, spätestens aber abgebrochen wird, wenn der Prüfling mit allen Zielklassen verglichen worden ist.

Die erste Aktivität 14 (Fig. 2) vergleicht in einer ersten Prüfung jeden der mit einem Operator $\Phi\{\}$ transformierten lokalen Merkmalvektoren ALCi(l) mit einer vordefinierten zugehörigen vektoriellen Sollgrösse $Q_{ALCi}(l)$. Alle der N·L vektoriellen Sollgrössen $Q_{ALCi}(l)$ haben die gleiche Dimension K wie die lokalen Merkmalvektoren $ALC_1(l)$ und nur reelle, positive Komponenten. Die erste Prüfung ist dann und nur dann erfolgreich erfüllt (wahr), wenn für alle N·L lokalen Merkmalvektoren ALCi(l) die folgende Boolesche Aussage wahr ist:

$$\Phi\{\, ALCi(l)\, \} \leq Q_{ALCi}(l) \qquad (G10)$$

was heisst, dass jede der K Komponenten des transformierten Vektors $\Phi\{\, ALCi(l)\, \}$ kleiner oder gleich der entsprechenden Komponente der vektoriellen Sollgrösse $Q_{ALCi}(l)$ ist.

Die in der Booleschen Aussage (G10) verwendete Transformation mit dem Operator $\Phi\{\}$ ist mit Hilfe von ersten vektoriellen Schätzungen (estimate) $ALCi^*(l)$ eines Mittels der lokalen Merkmalvektoren ALCi sowie zweiten vektoriellen Schätzungen $\sigma_{ALCi}^*(l)$, einer Streuungsart der lokalen Merkmalvektoren ALCi(l), wie folgt definiert:

$$\left(\, \Phi\{\, ALCi(l)\, \}\, \right)^T = \left(\frac{|\, ALCi_1(l) - ALCi^*_1(l)\, |}{|\, \sigma_{ALCi}^*{}_1(l)\, |}\, ,\right.$$

$$\left.\frac{|\, ALCi_2(l) - ALCi^*_2(l)\, |}{|\, \sigma_{ALCi}^*{}_2(l)\, |}\, , \cdot \cdot \, , \frac{|\, ALCi_k(l) - ALCi^*_k(l)\, |}{|\, \sigma_{ALCi}^*{}_k(l)\, |}\right) \qquad (G11)$$

Zugunsten einer bequemeren Darstellung wird in der Definition (G11) der durch die Transformation $\Phi\{\}$ resultie-

rende Vektor der Dimension K transponiert, d. h. als Zeilenvektor geschrieben.

Die ersten vektoriellen Schätzungen $ALCi^*(l)$ sowie die zweiten vektoriellen Schätzungen $\sigma_{ALCi}^*(l)$ sind von der Dimension K und in der Datenbasis im Datenspeicher 23 abgelegt, welche über den sechsten Kanal 24 für die erste Aktivität 14 zugänglich ist.

In einer bevorzugten Ausführungsform werden die Schätzungen $ALCi^*(l)$ bzw. $\sigma_{ALCi}^*(l)$ vom Initialisierungssystem 12 über den Initialisierungskanal 13 initialisiert.

Die erste Aktivität 14 übermittelt der zweiten Aktivität 16 über den ersten Kanal 15 das Resultat der ersten Prüfung und berechnet, falls die erste Prüfung erfolgreich ist, aus den N·L lokalen Merkmalvektoren $ALCi(l)$ einen Satz mit der Anzahl N globaler Zeilen-Merkmalvektoren $AGli$ der gleichen Dimension K.

Ein die Streuung ausdrückender globaler Zeilen-Merkmalvetor $AGli$ geht aus der Anwendung eines Operators EA {} auf alle K Komponenten des entsprechenden lokalen Merkmalvektors $ALCi(l)$ hervor:

$$( AGli )^T = ( EA\{ ALCi_1(l) \}, EA\{ ALCi_2(l) \}, ..$$

$$, EA\{ ALCi_k(l) \} ) \tag{G12}$$

wobei der Operator EA{} wie folgt definiert ist:

$$EA\{ ALCi_j(l) \} = \frac{1}{L} \cdot \sum_{l=1}^{L} \frac{| ALCi_j(l) - ALCi^*_j(l) |}{| \sigma_{ALCi}^*_j(l) |} \tag{G13}$$

Einer bequemeren Darstellung wegen wird in der Definition (G12) der Zeilen-Merkmalvektor $AGli$ transponiert, d. h. als Zeilenvektor geschrieben. Der Index j liegt im Bereich 1 bis K.

Die N Zeilen-Merkmalvektoren $AGli$ werden über den zweiten Kanal 17 der dritten Aktivität 18 übergeben, welche in einer zweiten Prüfung jeden der mit einem Operator $\Omega\{\}$ transformierten globalen Zeilen-Merkmalvektoren $AGli$ mit einer vordefinierten zugehörigen vektoriellen Sollgrösse $Q_{AGli}$ vergleicht. Alle der N vektoriellen Sollgrössen $Q_{AGli}$ haben die gleiche Dimension K wie die Zeilen-Merkmalvektoren $AGli$ und nur reelle, positive Komponenten. Die zweite Prüfung ist dann und nur dann erfolgreich erfüllt (wahr), wenn für alle N globalen Zeilen-Merkmalvektoren $AGli$ die folgende Boolesche Aussage wahr ist:

$$\Omega\{ AGli \} \leq Q_{AGli} \tag{G14}$$

was heisst, dass jede der K Komponenten des transformierten Vektors $\Omega\{ AGli \}$ kleiner oder gleich der entsprechenden Komponente der vektoriellen Sollgrösse $Q_{AGli}$ ist.

Die in der Booleschen Aussage (G14) verwendete Transformation mit dem Operator $\Omega\{\}$ ist mit Hilfe von dritten vektoriellen Schätzungen (estimate) $AGli^*$ eines Mittels der globalen Zeilen-Merkmalvektoren $AGli$ sowie vierten vektoriellen Schätzungen $\sigma_{AGli}^*$, einer Streuungsart der globalen Zeilen-Merkmalvektoren $AGli$, wie folgt definiert :

$$( \Omega\{ AGli \} )^T = ( \frac{| AGli_1 - AGli^*_1 |}{| \sigma_{AGli}^*_1 |}$$

$$\frac{| AGli_2 - AGli^*_2 |}{| \sigma_{AGli}^*_2 |}, .., \frac{| AGli_k - AGli^*_k |}{| \sigma_{ALCi}^*_k |} ) \tag{G15}$$

Zugunsten einer bequemeren Darstellung wird in der Definition (G15) der durch die Transformation $\Omega\{\}$ resultierende Vektor der Dimension K transponiert, d. h. als Zeilenvektor geschrieben.

Die dritten vektoriellen Schätzungen $AGli^*$ sowie die vierten vektoriellen Schätzungen $\sigma_{AGli}^*$ sind von der Dimension K und in der über den achten Kanal 26 für die dritte Aktivität 18 zugänglichen Datenbasis im Datenspeicher 23 abgelegt.

In einer bevorzugten Ausführungsform werden die Schätzungen $AGIi^*$ bzw. $\sigma_{AGIi}^*$ vom Initialisierungssystem 12 über den Initialisierungskanal 13 initialisiert.

Die dritte Aktivität 18 übermittelt der zweiten Aktivität 16 über den dritten Kanal 19 das Resultat der zweiten Prüfung und berechnet, falls die zweite Prüfung erfolgreich ist, aus den N globalen Zeilen-Merkmalvektoren AGIi einen einzigen globalen Flächen-Merkmalvektor AGF der gleichen Dimension K nach der folgenden Formel:

$$\text{AGF} = \frac{1}{N} \cdot \sum_{i=1}^{N} \text{AGIi} \qquad (G16)$$

Die dritte Aktivität 18 übergibt den Flächen-Merkmalvektor AGF über den vierten Kanal 20 der vierten Aktivität 21, welche die in der Literatur bekannte Distanz $d^2$ von Mahalanobis zwischen dem Flächen-Merkmalvektor AGF und einer fünften vektoriellen gemittelten Schätzung $AGF^*$ des Flächen-Merkmalvektors AGF berechnet und in einer dritten Prüfung die berechnete Distanz $d^2$ mit einem skalaren Sollwert $Q_a^2$ vergleicht. Die skalare und reelle Distanz $d^2$ ist mit Hilfe einer Kovarianz-Matrix $C_{AGF}^*$ wie folgt definiert:

$$d^2 = (\text{AGF-AGF}^*)^T \cdot (C_{AGF}^*)^{-1} \cdot (\text{AGF-AGF}^*) \qquad (G17)$$

wobei die Kovarianz-Matrix $C_{AGF}^*$ mit der Dimension $K \cdot K$ quadratisch und diagonalsymmetrisch aufgebaut ist, so dass $C_{AGF}^*{}_{m,n} = C_{AGF}^*{}_{n,m}$ mit $m <> n$ gilt. Die Kovarianz-Matrix weist nur reelle Elemente auf, welche in der Diagonalen $m=n$ Schätzungen $(\sigma_{AGF}^*{}_m)^2$ der nach bekannter Art definierten Varianzen der Komponenten $AGF_m$ des Flächen-Merkmalvektors AGF und daneben Schätzungen $Cov^*{}_{m,n}$ der nach bekannter Vorschrift berechenbaren Kovarianzen zwischen ersten Komponenten $AGF_m$ und zweiten Komponenten $AGF_n$ sind:

$$C_{AGF}^* = \begin{bmatrix} (\sigma_{AGF}^*{}_1)^2 & Cov^*{}_{1,2} & \cdots & Cov^*{}_{1,K} \\ Cov^*{}_{2,1} & & & \cdot \\ \cdot & & & \cdot \\ \cdot & & & \cdot \\ Cov^*{}_{K,1} & \cdots & & (\sigma_{AGF}^*{}_K)^2 \end{bmatrix} \qquad (G18)$$

Die Kovarianz-Matrix $C_{AGF}^*$ sowie die fünfte Schätzung $AGF^*$ sind in der Datenbasis im Datenspeicher 23 abgelegt, welche für die vierte Aktivität 21 über den neunten Kanal 27 verfügbar ist. Mit Vorteil werden die Kovarianz-Matrix $C_{AGF}^*$ sowie die Schätzung $AGF^*$ vom Initialisierungssystem 12 über den Initialisierungskanal 13 initialisiert.

Die dritte Prüfung ist erfolgreich erfüllt (wahr), wenn die folgende Boolesche Aussage wahr ist:

$$d^2 \le Q_d^2 \qquad (G19)$$

Das Resultat der dritten Prüfung wird der zweiten Aktivität 16 über den fünften Kanal 22 übergeben.

Die zweite Aktivität 16 wertet die Resultate der drei Prüfungen aus und übermittelt das Ergebnis über einen zweiten, mit dem Aufnahmesystem verbundenen Ausgangskanal 10b dem Aufnahmesystem 1, welches den Prüfling 3 darauf hin entweder einer Kasse übergibt oder zurückweist. Nur wenn die erste Prüfung sowie die zweite Prüfung und auch die dritte Prüfung erfolgreich sind, steht die zugehörige Zielklasse des Prüfling 3 sicher fest, was die zweite Aktivität dem Dienstleistungssystem 11 über den ersten Ausgangskanal 10a - vorzugsweise durch Übermitteln der festgestellten Klasse des Prüflings - mitteilt, worauf das Dienstleistungssystem 11 eine Dienstleistung ausführen kann.

Nur falls die Zielklasse des Prüflings 3 sicher feststeht, werden alle zur Zielklasse gehörenden Schätzungen auf der Basis der gemessenen Vektoren mci(l) des aktuellen Prüflings 3 von der zweiten Aktivität 16 neu berechnet und in der Datenbasis aktualisiert.

Mit Hilfe eines Gewichtungsfaktors p, wobei p>0 gilt, werden die neuen, mit einem Index t bezeichneten Schätzungen aus den entsprechenden alten Schätzungen, welche mit einem Index t-1 bezeichnet sind, und dem entsprechenden aktuellen Merkmalvektor des Prüflings in bekannter Art wie folgt berechnet:

$$ALCi^*(l)_t = ( p \cdot ALCi^*(l)_{t-1} + ALCi(l) )/(p+1) \qquad (G20)$$

$$AGli^*_t = ( p \cdot AGli^*_{t-1} + AGli )/(p+1) \qquad (G21)$$

$$AGF^*_t = ( p \cdot AGF^*_{t-1} + AGF )/(p+1) \qquad (G21a)$$

$$Cov^*_{(m,n)t} = \frac{p \cdot Cov^*_{(m,n)t-1} + (AGF_m - AGF^*_{(m)t-1})(AGF_n - AGF^*_{(n)t-1})}{p+1} \qquad (G22)$$

Unter Beibehaltung guter Klassifizierungseigenschaften gelingt eine wesentliche Zeitersparnis, indem neue Schätzungen von Streuungen nur näherungsweise und auf folgende Art berechnet werden:

$$\sigma_{ALCi}^*(l)_t = \frac{p \cdot \sigma_{ALCi}^*(l)_{t-1} + (\pi/2)^{1/2} \cdot |ALCi(l) - ALCi^*(l)_{t-1}|}{p+1} \qquad (G23)$$

$$\sigma_{AGli}^*_t = \frac{p \cdot \sigma_{AGli}^*_{t-1} + (\pi/2)^{1/2} \cdot |AGli - AGli^*_{t-1}|}{p+1} \qquad (G24)$$

Der Gewichtungsfaktor p hat im allgemeinen in den Gleichungen (G20), (G21), (G21a), (G22), (G23) und (G24) je einen anderen aktuellen Wert.

Statt wie in bekannter Art die Quadratwurzel aus der Differenz der beiden quadrierten Beträge zweier Vektoren zu berechnen, wird in der Formel (G23) bzw. (G24) zur Berechnung der neuen Schätzung $\sigma_{ALCi}^*(l)_t$ bzw. $\sigma_{AGli}^*_t$ der Betrag der Differenz zweier Vektoren mit dem Faktor $(\pi/2)^{1/2}$ multipliziert, was den Aufwand bei der grossen Anzahl neuer Schätzungen, welche nach jeder erfolgreichen Klassifizierung berechnet werden, entscheidend verringert. Bei gleichen Voraussetzungen wird beispielsweise die Rechenzeit für die beschriebene Aktualisierung der Schätzungen zehnmal verkleinert.

Das Ablauf-Diagramm in der Fig. 4 zeigt die wichtigsten Operationen, welche vom Klassifizierungssystem 8 für den Prüfling zu jeder der Zielklassen je nach Verlauf der Klassifizierung notwendigerweise zwischen einem Anfang 28 und einem Ende 29 ausgeführt oder übersprungen werden.

Anschliessend an den Anfang folgt nach einer ersten Verzweigung 30 entweder ein Aktionsblock 31 oder ein erster Berechnungsblock 32, dem eine zweite Verzweigung 33 folgt. Die zweite Verzweigung 33 führt entweder zum Aktionsblock 31 oder zu einem zweiten Berechnungsblock 34, dem sich eine dritte Verzweigung 35 anschliesst, deren Nachfolger der Aktionsblock 31 oder ein dritter Berechnungsblock 36 ist, der wie der Aktionsblock 31 mit dem Ende 29 abgeschlossen ist.

Für die erste Verzweigung 30 ist die erste Prüfung entscheidend; nur wenn die dazugehörige Boolesche Aussage (G10) wahr ist, werden im ersten Berechnungsblock 32 nach der Formel (G12) aus den N·L lokalen Merkmalvektoren ALCi(l) die N Zeilen-Merkmalvektoren AGli berechnet, andernfalls ist die Klassifizierung nicht mehr möglich, so dass sie mit dem Aktionsblock 31 abgeschlossen wird. Die zweite Verzweigung 33 wird durch die zweite Prüfung gesteuert. Nur falls ihre Boolesche Aussage (G14) wahr ist, wird im zweiten Berechnungsblock 34 nach der Formel (G16) aus den N globalen Zeilen-Merkmalvektoren ein einziger globaler Flächen-Merkmalvektor AGF berechnet, ansonst wird die damit erfolglose Klassifizierung mit dem Aktionsblock 31 beendet. Die dritte Verzweigung ist durch die dritte Prüfung bestimmt, wonach bei wahrer Boolescher Aussage (G19) der dritte Berechnungsblock 36 und sonst der Aktionsblock 31 ausgeführt wird.

Im Ablauf-Diagramm ist leicht ersichtlich, dass einerseits der dritte Berechnungsblock 36 nur dann ausgeführt wird, wenn die erste, sowie die zweite und auch noch die dritte Prüfung erfolgreich ist. Anderseits wird die Klassifizierung durch den Aktionsblock 31 beendet, sobald eine der drei Prüfungen nicht erfolgreich durchführbar ist.

Im dritten Berechnungsblock 36 wird die erfolgreiche Klassifizierung dem Dienstleistungssystem 11 übermittelt und die Datenbasis mit neuen Schätzungen für ALCi*(l) nach der Formel (G20), für AGli* nach der Formel (G21), für AGF* nach der Formel (G21a), für Cov*$_{(m,n)}$ nach der Formel (G22), für $\sigma_{ALCi}$*(l) nach der Formel (G23) und für $\sigma_{AGli}$* nach der Formel (G24) aktualisiert.

In eine Anweisung des Aktionsblocks 31 wird nötigenfalls dem Aufnahmesystem 1 die erfolglose Klassifizierung signalisiert.

Das beschriebene Klassifizierungssystem 8 ermöglicht durch die drei Prüfungen, von denen jede mit unterschiedlich verknüpften Merkmalen des Prüflings (3) durchgeführt wird, eine sichere Klassifizierung. Dadurch, dass viele physikalische Merkmale des Prüflings erfasst und miteinander verknüpft werden, verliert eine problematische und teure Auswahl von signifikanten Merkmalen an Bedeutung.

Auf Wunsch kann das Klassifizierungssystem weitere Prüfungen wie beispielsweise eine Prüfung der Länge oder der Breite des Prüflings 3, auswerten.

## Patentansprüche

1. Einrichtung mit einem Aufnahmesystem (1), einem Vorverarbeitungssystem (7) und einem eine Datenbasis aufweisenden, lernenden Klassifizierungssystem (8) zur Klassifizierung eines Musters, insbesondere von einer Banknote oder von einer Münze, anhand der Werte von physikalischen Merkmalen, die vom Aufnahmesystem (1) geliefert werden, wobei das Aufnahmesystem (1), das Vorverarbeitungssystem (7) und das Klassifizierungssystem (8) in der Reihenfolge der Aufzählung im wesentlichen zu einer Kaskade geschaltet sind, an deren Ausgang ein Dienstleistungssystem (11) angeschlossen ist, dadurch gekennzeichnet,

   [a] dass das Vorverarbeitungssystem (7)

   [a.a] eine Vorverarbeitungs-Aktivität (6) aufweist, welche die Werte der physikalischen Merkmale in mehrere lokale Merkmalvektoren ALC$_i$(l) transformiert,

   [b] dass das Klassifizierungssystem (8) mehrere auf die Datenbasis zugreifende Aktivitäten (14; 16; 18; 21) aufweist, von denen

   [b.a] eine erste Aktivität (14)

   [b.a.a] in einer ersten Prüfung für jeden der mit einem Operator $\Phi\{\}$ transformierten lokalen Merkmalvektoren ALC$_i$(l) einen Vergleich mit einer vektoriellen Sollgrösse Q$_{ALCi}$(l) ausführt und
   [b.a.b] das Resultat der ersten Prüfung einer zweiten Aktivität (16) über einen ersten Datenkanal (15), der von der ersten Aktivität (14) zur zweiten Aktivität (16) führt, mitteilt sowie
   [b.a.c] aus den lokalen Merkmalvektoren ALC$_i$(l) mit Hilfe in der Datenbasis abgespeicherter zugehöriger erster vektorieller Schätzungen ALC$_i$*(l) und in der Datenbasis abgespeicherter zugehöriger zweiter vektorieller Schätzungen $\sigma_{ALCi}$*(l) einen globalen Zeilen-Merkmalvektor AGl$_i$ berechnet, wonach

   [b.b] alle globalen Zeilen-Merkmalvektoren AGl$_i$ einer dritten Aktivität (18) über einen zweiten Datenkanal (17), der von der ersten Aktivität (14) zur dritten Aktivität (18) führt, übergeben werden, wobei die kombination der Schritte [b.a.c] und [b.b] nur bei erfolgreich erfüllter erster Prüfung durchgeführt wird,
   [b.c] dass die dritte Aktivität (18)

   [b.c.a] in einer zweiten Prüfung für jeden mit einem - eine dritte vektorielle Schätzung AGli* und eine vierte vektorielle Schätzung $\sigma_{AGli}$* benutzenden - Operator $\Omega\{\}$ transformierten globalen Zeilen-Merkmalvektor AGl$_i$ einen Vergleich mit einer weiteren vektoriellen Sollgrösse Q$_{AGli}$ ausführt und
   [b.c.b] das Resultat der zweiten Prüfung der zweiten Aktivität (16) über einen dritten Datenkanal (19), der von der dritten Aktivität (18) zur zweiten Aktivität (16) führt, mitteilt sowie
   [b.c.c] aus den globalen Zeilen-Merkmalvektoren AGl$_i$ einen einzigen globalen Flächen-Merkmalvektor AGF berechnet, wonach

   [b.d] der globale Flächen-Merkmalvektor AGF einer vierten Aktivität (21) über einen vierten Datenkanal (20), der von der dritten Aktivität (18) zur vierten Aktivität (21) führt, übergeben wird, wobei die kombination der Schritte [b.c.c] und [b.d] nur bei erfolgreich erfüllter zweiter Prüfung durchgeführt wird,
   [b.e] dass die vierte Aktivität (21)

[b.e.a] die Distanz $d^2$ nach Mahalanobis zwischen dem globalen Flächen-Merkmalvektor AGF und einer in der Datenbasis abgespeicherten fünften vektoriellen Schätzung AGF* mit Hilfe einer Kovarianz-Matrix $C_{AGF}$* berechnet und

[b.e.b] in einer dritten Prüfung einen Vergleich mit einer Sollgrösse $d_{max}^2$ durchführt und

[b.e.c] das Resultat der dritten Prüfung der zweiten Aktivität (16) über einen fünften Datenkanal (22), der von der vierten Aktivität (21) zur zweiten Aktivität (16) führt, mitteilt,

[b.f] dass die zweite Aktivität (16) nur, falls alle drei Prüfungen erfolgreich erfüllt sind,

[b.f.a] einerseits

[b.f.a.a] neue erste Schätzungen ALCi*(l),
[b.f.a.b] neue zweite Schätzungen $\sigma_{ALCi}$*(l),
[b.f.a.c] neue dritte Schätzungen AGIi*,
[b.f.a.d] neue vierte Schätzungen $\sigma_{AGIi}$* und
[b.f.a.e] eine neue fünfte Schätzung AGF* sowie
[b.f.a.f] eine neue Kovarianz-Matrix $C_{AGF}$* berechnet und damit

[b.f.b] die Datenbasis aktualisiert und
[b.f.c] anderseits dem Dienstleistungssystem (11) die ermittelte Klasse des Prüflings mitteilt,

wobei jede Aktivität als eine elektronische Schaltung oder softwaremäßig als ein Prozeß, ein Programmstück oder als eine Routine verwirklicht ist.

2. Einrichtung nach Anspruch 1, dadurch gekennzeichnet, dass der von der ersten Aktivität (14) für die erste Prüfung verwendete Operator $\Phi\{\}$ mit

$$( \Phi\{ ALCi(l) \} )^T = (\frac{| ALCi_1(l) - ALCi^*_1(l) |}{| \sigma_{ALCi}{}^*_1(l) |},$$

$$\frac{| ALCi_2(l) - ALCi^*_2(l) |}{| \sigma_{ALCi}{}^*_2(l) |}, .., \frac{| ALCi_k(l) - ALCi^*_k(l) |}{| \sigma_{ALCi}{}^*_k(l) |})$$

definiert ist, wobei der hochgestellte Buchstabe T transponierte Darstellung bedeutet.

3. Einrichtung nach Anspruch 1 oder 2, dadurch gekennzeichnet, dass der von der dritten Aktivität (18) für die zweite Prüfung verwendete Operator $\Omega\{\}$ mit

$$( \Omega\{ AGIi \} )^T = (\frac{| AGIi_1 - AGIi^*_1 |}{| \sigma_{AGIi}{}^*_1 |},$$

$$\frac{| AGIi_2 - AGIi^*_2 |}{| \sigma_{AGIi}{}^*_2 |}, .., \frac{| AGIi_k - AGIi^*_k |}{| \sigma_{ALCi}{}^*_k |})$$

definiert ist.

4. Einrichtung nach einem der Ansprüche 1 bis 3, dadurch gekennzeichnet, dass die dritte Aktivität (18) den globalen Flächen-Merkmalvektor AGF aus einer Anzahl (N) Zeilenvektoren AGIi nach der Formel

$$AGF = \frac{1}{N} \cdot \sum_{i=1}^{N} AGIi$$

berechnet.

**5.** Einrichtung nach einem der Ansprüche 1 bis 4, dadurch gekennzeichnet, dass die zweite Aktivität (16) die neuen zweiten Schätzungen $\sigma_{ALCi}{}^*(l)_t$ näherungsweise mit

$$\sigma_{ALCi}{}^*(l)_t = \frac{p \cdot \sigma_{ALCi}{}^*(l)_{t-1} + (\pi/2)^{1/2} \cdot |ALCi(l) - ALCi^*(l)_{t-1}|}{p + 1}$$

berechnet, wobei die alten Schätzungen mit t-1 indiziert sind und p ein Gewichtungsfaktor ist, für den $p \geq 0$ gilt.

**6.** Einrichtung nach einem der Ansprüche 1 bis 5, dadurch gekennzeichnet, dass die zweite Aktivität (16) die neuen vierten Schätzungen $\sigma_{AGli}{}^*{}_t$ näherungsweise mit

$$\sigma_{AGli}{}^*{}_t = \frac{p \cdot \sigma_{AGli}{}^*{}_{t-1} + (\pi/2)^{1/2} \cdot |AGli - AGli^*{}_{t-1}|}{p + 1}$$

berechnet, wobei p ein Gewichtungsfaktor ist und $p \geq 0$ gilt.

**7.** Einrichtung nach einem der Ansprüche 1 bis 6 zur Klassifizierung eines Musters einer Banknote, dadurch gekennzeichnet, dass das Aufnahmesystem (1) zur Erfassung der physikalischen Merkmale eine aus einer Anzahl (N) Sensoren bestehende Sensorgruppe (4) aufweist, wobei jeder Sensor von einer grösseren Anzahl (L) Bildpartien je einen reflektierten Intensitätswert der Spektralbereiche Grün, Rot und Infrarot misst.

**8.** Einrichtung nach Anspruch 7, dadurch gekennzeichnet, dass die erfassten physikalischen Merkmale zur weiteren Verarbeitung als gemessene dreidimensionale Vektoren mci(l) gruppiert sind, wobei mit i=1 bis N und l=1..L für die Vektoren mci(l) die Definition $( mci(l) )^T = ( mci_1(l), mci_2(l), mci_3(l) )$ gilt und wobei die Komponenten mit dem Index 1 Intensitätswerte des Spektralbereichs Grün, die Komponenten mit dem Index 2 Intensitätswerte des Spektralbereichs Rot und die Komponenten mit dem Index 3 Intensitätswerte des Spektralbereichs Infrarot enthalten.

**9.** Einrichtung nach Anspruch 8, dadurch gekennzeichnet, dass die Vorverarbeitungs-Aktivität (6) die ersten Komponenten der lokalen Merkmalvektoren ALCi(l) mit

$$ALCi_1(l) = mci_1(l) + mci_2(l) + mci_3(l)$$

die zweiten Komponenten mit

$$ALCi_2(l) = \frac{mci_1(l)}{mci_1(l) + mci_2(l) + mci_3(l)}$$

die dritten Komponenten mit

$$ALCi_3(l) = \frac{mci_2(l)}{mci_1(l) + mci_2(l) + mci_3(l)}$$

die vierten Komponenten mit

$$ALCi_1(l) = \frac{mci_1(l)}{\dfrac{1}{L} \cdot \sum\limits_{j=1}^{L} mci_1(j)}$$

und die fünften Komponenten mit

$$ALCi_5(l) = \frac{mci_3(\ell)}{\dfrac{1}{L} \cdot \sum\limits_{j=1}^{L} mci_3(j)}$$

berechnet.

## Claims

1.  An apparatus comprising a receiving system (1), a pre-processing system (7), and a learning classification system (8) having a database, for the classification of a pattern, especially of a bank note or a coin, by reference to the values of physical features which are supplied from the receiving system (1), wherein the receiving system (I), the pre-processing system (7) and the classification system (8) are connected in the order of enumeration substantially to form a cascade to the output of which a service system (11) is connected, characterised in that

    [a] the pre-processing system (7)
    [a.a] has a pre-processing activity (6) which transforms the values of the physical features into a plurality of local feature vectors $ALC_i(l)$,
    [b] the classification system (8) has a plurality of activities (14; 16; 18; 21) which access the database and of which

    [b.a] a first activity (14)

    [b.a.a] in a first test performs for each of the local feature vectors $ALC_i(l)$ transformed with an operator $\Phi\{\}$ a comparison with a vectorial reference value $Q_{ALCi}(l)$ and
    [b.a.b] communicates the result of the first test to a second activity (16) by way of a first data channel (15) which leads from the first activity (14) to the second activity (16), and
    [b.a.c] computes a global line feature vector $AGl_i$ from the local feature vectors $ALC_1(l)$ by means of associated first vectorial estimates $ALC_i^*(l)$ stored in the database and associated second vectorial estimates $\sigma_{ALCi}^*(l)$ stored in the database, whereafter

    [b.b] all global line feature vectors $AGl_i$ are passed to a third activity (18) by way of a second data channel (17) which leads from the first activity (14) to the third activity (18), the combination of steps [b.a.c] and [b.b] being carried out only if the first test has been successfully satisfied,
    [b.c] the third activity (18)

    [b.c.a] in a second test performs for each global line feature vector $AGl_i$ transformed with an operator $\Omega\{\}$ - which uses a third vectorial estimate $AGli^*$ and a fourth vectorial estimate $\sigma_{AGli}^*$ - a comparison with a further vectorial reference value $Q_{AGli}$ and
    [b.c.b] communicates the result of the second test to the second activity (16) by way of a third data channel (19) which leads from the third activity (18) to the second activity (16), and
[b.c.c] computes a single global surface feature vector AGF from the global line feature vectors $AGI_i$, whereafter

[b.d] the global surface feature vector AGF is passed to a fourth activity (21) by way of a fourth data channel (20) which leads from the third activity (18) to the fourth activity (21), the combination of steps [b.c.c] and [b.d] being carried out only if the second test has been successfully satisfied,
[b.e] the fourth activity (21)

[b.e.a] computes the Mahalanobis distance $d^2$ between the global surface feature vector AGF and a fifth vectorial estimate AGF*, which is stored in the database, by means of a covariance matrix $C_{AGF^*}$ and
[b.e.b] in a third test performs a comparison with a reference value $d_{max}^2$ and
[b.e.c] communicates the result of the third test to the second activity (16) by way of a fifth data channel (22) which leads from the fourth activity (21) to the second activity (16),

[b.f] only if all three tests have been successfully satisfied, the second activity (16)

[b.f.a] on the one hand computes

[b.f.a.a] new first estimates ALCi*(l),
[b.f.a.b] new second estimates $\sigma_{ALCi}^*$ (l),
[b.f.a.c] new third estimates AGIi*,
[b.f.a.d] new fourth estimates $\sigma AGI^*$ and
[b.f.a.e] a new fifth estimate AGF* and also
[b.f.a.f] a new covariance matrix $C_{AGF}^*$ and

[b.f.b] updates the database therewith and
[b.f.c] on the other hand communicates the ascertained class of the test item to the service system (11),

each activity being implemented in the form of an electronic circuit or, in software, in the form of a process, a piece of program or a routine.

2. An apparatus according to claim 1, characterised in that the operator $\Phi\{\}$ used by the first activity (14) for the first test is defined by

$$\left( \Phi\{ ALCi(l) \} \right)^T = \left( \frac{| ALCi_1(l) - ALCi^*_1(l) |}{| \sigma_{ALCi}^*_1(l) |} , \right.$$

$$\left. \frac{| ALCi_2(l) - ALCi^*_2(l) |}{| \sigma_{ALCi}^*_2(l) |} , .., \frac{| ALCi_K(l) - ALCi^*_K(l) |}{| \sigma_{ALCi}^*_K(l) |} , \right.$$

wherein the superscript letter T denotes transposed representation.

3. An apparatus according to claim 1 or 2, characterised in that the operator $\Omega\{\}$ used by the third activity (18) for the second test is defined by

$$\left( \Omega\{ AGIi \} \right)^T = \left( \frac{| AGIi_1 - AGIi^*_1 |}{| \sigma_{AGIi}^*_1 |} , \right.$$

$$\left. \frac{| AGIi_2 - AGIi^*_2 |}{| \sigma_{AGIi}^*_2 |} , .., \frac{| AGIi_K - AGIi^*_k |}{| \sigma_{ALCi}^*_K |} \right)$$

4. An apparatus according to any one of claims 1 to 3, characterised in that the third activity (18) computes the global surface feature vector AGF from a number (N) of line vectors AGIi in accordance with the formula

$$AGF = \frac{1}{N} \cdot \sum_{i=1}^{N} AGIi.$$

5. An apparatus according to any one of claims 1 to 4, characterised in that the second activity (16) computes the new second estimates $\sigma_{ALCi}{}^{*}(l)_t$ by approximation by

$$\sigma_{ALCi}{}^{*}(l)_t = \frac{p \cdot \sigma_{ALCi}{}^{*}(l)_{t-1} + (\pi/2)^{1/2} \cdot |ALCi(l) - ALCi^{*}(l)_{t-1}|}{p + 1},$$

wherein the old estimates are subscripted t-1 and p is a weighting factor for which $p \geq 0$.

6. An apparatus according to any one of claims 1 to 5, characterised in that the second activity (16) computes the new fourth estimates $\sigma_{AGli}{}^{*}{}_t$ by approximation by

$$\sigma_{ALCi}{}^{*}{}_t = \frac{p \cdot \sigma_{AGli}{}^{*}{}_{t-1} + (\pi/2)^{1/2} \cdot |AGli - AGli^{*}{}_{t-1}|}{p + 1},$$

wherein p is a weighting factor and $p \geq 0$.

7. An apparatus according to any one of claims 1 to 6 for the classification of a pattern of a bank note, characterised in that the receiving system (1) for detecting the physical features has a sensor group (4) consisting of a number (N) of sensors, wherein each sensor measures from a larger number (L) of image portions a reflected intensity value of each of the spectral ranges green, red and infrared.

8. An apparatus according to claim 7, characterised in that the detected physical features are grouped for further processing as measured three-dimensional vectors mci(l), wherein with i = 1 to N and l = 1..L for the vectors mci(l) the definition $(mci(l))^{T} = (mci_1(l), mci_2(l), mci_3(l)$ applies and wherein the components having the index 1 contain intensity values of the spectral range green, the components having the index 2 contain intensity values of the spectral range red and the components having the index 3 contain intensity values of the spectral range infrared.

9. An apparatus according to claim 8, characterised in that the pre-processing activity (6) computes the first components of the local feature vectors ALCi(l) by

$$ALC_1(l) = mci_1(l) + mci_2(l) + mci_3(l),$$

the second components by

$$ALCi_2(l) = \frac{mci_1(l)}{mci_1(l) + mci_2(l) + mci_3(l)},$$

the third components by

$$ALCi_3(l) = \frac{mci_2(l)}{mci_1(l) + mci_2(l) + mci_3(l)},$$

the fourth components by

$$ALCi_4(l) = \frac{mci_1(l)}{\frac{1}{L} \cdot \sum_{j=1}^{L} mci_{1(j)}}$$

and the fifth components by

$$ALCi_5(l) = \frac{mci_3(l)}{\frac{1}{L} \cdot \sum_{j=1}^{L} mci_{3(j)}} \cdot$$

**Revendications**

1.  Dispositif comprenant un système de chargement (1), un système de traitement préliminaire (7) et un système de classification (8) adaptatif comportant une base de données, destiné à la classification d'un modèle, en particulier un billet de banque ou une pièce ce monnaie, à l'appui des valeurs des caractéristiques physiques, qui sont fournies par le système de chargement (1), le système de chargement (1), le système de traitement préliminaire (7) et le système de classification (8) étant montés en série sensiblement dans l'ordre cité, à la sortie duquel est raccordé un système de prestation de services (11), caractérisé

    [a] en ce que le système de traitement préliminaire (7)

    [a.a] comporte une activité de traitement préliminaire (6), qui transforme les valeurs des caractéristiques physiques en plusieurs vecteurs caractéristiques locaux $ALC_1(l)$,

    [b] en ce que le système de classification (8) comporte plusieurs activités (14 ; 16 ; 18 ; 21) avec un accès à la base de données, parmi lesquelles

    [b.a] une première activité (14)

    [b.a.a] exécute, dans un premier examen pour chaque vecteur caractéristique local $ALC_1(l)$, transformé avec un opérateur $\Phi\{\}$, une comparaison avec une valeur théorique vectorielle $Q_{ALC1}(l)$ et
    [b.a.b] communique le résultat du premier examen à une deuxième activité (16) par l'intermédiaire d'un premier canal de données (15), qui relie la première activité (14) à la deuxième activité (16), et
    [b.a.c] calcule, à partir des vecteurs caractéristiques locaux $ALC_1(l)$, à l'aide des premières évaluations vectorielles $ALC_1^*(l)$ correspondantes, stockées dans la base de données et des deuxièmes évaluations vectorielles $\sigma_{ALC1}^*(l)$ correspondantes, stockées dans la base de données, un vecteur caractéristique de lignes global AGIT, et ensuite

    [b.b] tous les vecteurs caractéristiques de lignes globaux $AGI_1$ sont transmis à une troisième activité (18) par l'intermédiaire d'un deuxième canal de données (17), qui relie la première activité (14) à la troisième activité (18), la combinaison des étapes [b.a.c] et [b.b] étant exécutée à la seule condition que le premier examen ait donné des résultats satisfaisants,

    [b.c] en ce que la troisième activité (18)

    [b.c.a] exécute, dans un deuxième examen pour chaque vecteur caractéristique de lignes global $AGI_1$, transformé avec un opérateur $\Omega\{\}$ - utilisant une troisième évaluation vectorielle $AGIi^*$ et une quatrième évaluation vectorielle $\sigma_{AGI}^*$ - une comparaison avec une autre valeur théorique vectorielle $Q_{AGI1}$ et
    [b.c.b] communique le résultat du deuxième examen à la deuxième activité (16) par l'intermédiaire d'un troisième canal de données (19), qui relie la troisième activité (18) à la deuxième activité (16), et
    [b.c.c] calcule, à partir des vecteurs caractéristiques de lignes globaux $AGI_1$, un seul vecteur

caractéristique de surface global AGF, et ensuite

[b.d] le vecteur caractéristique de surface global AGF est transmis à une quatrième activité (21) par l'intermédiaire d'un quatrième canal de données (20), qui relie la troisième activité (18) à la quatrième activité (21), la combinaison des étapes [b.c.c] et [b.d] étant exécutée à la seule condition que le deuxième examen ait donné des résultats satisfaisants,
[b.e] en ce que la quatrième activité (21)

[b.e.a] calcule la distance $d^2$ selon Mahalanobis, entre le vecteur caractéristique de surface global AGF et une cinquième évaluation vectorielle AGF*, stockée dans la base de données, à l'aide d'une matrice de covariance $C_{AGF}{}^*$, et
[b.e.b] exécute dans un troisième examen une comparaison avec une valeur théorique $d_{max}{}^2$, et
[b.e.c] communique le résultat du troisième examen à la deuxième activité (16) par l'intermédiaire d'un cinquième canal de données (22), qui relie la quatrième activité (21) à la deuxième activité (16),

[b.f] en ce que la deuxième activité (16) calcule, à la seule condition que les trois examens aient été exécutés avec succès,

[b.f.a] d'une part,

[b.f.a.a] de nouvelles premières évaluations $ALC_i{}^*(l)$,
[b.f.a.b] de nouvelles deuxièmes évaluations $\sigma_{ALCi}{}^* (l)$,
[b.f.a.c] de nouvelles troisièmes évaluations $AGI_i{}^*$,
[b.f.a.d] de nouvelles quatrièmes évaluations $\sigma_{AGI1}{}^*$ et
[b.f.a.e] une nouvelle cinquièrme évaluation AGF*, ainsi que
[b.f.a.f] une nouvelle matrice de covairance $C_{AGF}{}^*$, et à partir de là

[b.f.b] actualise la base de données et,
[b.f.c] d'autre part, communique au système de prestation de services (11) la classe déterminée du modèle,

chaque activité étant réalisée comme un circuit électronique ou, sur le plan d'un logiciel, comme un processus, une partie de programme ou comme une routine.

**2.** Dispositif selon la revendication 1, caractérisé en ce que l'opérateur $\Phi\{\}$ utilisé par la première activité (14) pour le premier examen, est défini par

$$\left(\Phi\{ALCi(l)\}\right)^T = \left(\frac{|ALCi_1(l) - ALCi \;{}^*_1 \;(l)|}{|\sigma_{ALCi} \;{}^*_1 \;(l)|}\right.$$

$$\frac{|ALCi_2(l) - ALCi \;{}^*_2 \;(l)|}{|\sigma_{ALCi} \;{}^*_2 \;(l)|}, \quad . \quad . \quad , \quad \left.\frac{|ALCi_K(l) - ALCi \;{}^*_K \;(l)|}{|\sigma_{ALCi} \;{}^*_K \;(l)|}\right)$$

dans laquelle la lettre T en exposant signifie une représentation transposée.

**3.** Dispositif selon la revendication 1 ou 2, caractérisé en ce que l'opérateur $\Omega\{\}$ utilisé par la troisième activité (18) pour le deuxième examen, est défini par

$$\left(\Omega\{AGIi\}\right)^{\tau} = \left(\frac{\left|AGI_1 - AGIi\,^{\star}_1\right|}{\left|\sigma_{AGI1}\,^{\star}_1\right|}\right.$$

$$\frac{\left|AGIi_2 - AGIi\,^{\star}_2\right|}{\left|\sigma_{AGI1}\,^{\star}_2\right|}, \quad . \quad . \quad , \quad \left.\frac{\left|AGIi_K - AGIi\,^{\star}_K\right|}{\left|\sigma_{ALC1}\,^{\star}_K\right|}\right)$$

**4.** Dispositif selon l'une quelconque des revendications 1 à 3, caractérisé en ce que la troisième activité (18) calcule le vecteur caractéristique de surface global AGF à partir d'un nombre (N) de vecteurs de lignes AGIi, selon la formule suivante :

$$AGF = \frac{1}{N} \cdot \sum_{i=1}^{N} AGIi.$$

**5.** Dispositif selon l'une quelconque des revendications 1 à 4, caractérisé en ce que la deuxième activité (16) calcule les nouvelles deuxièmes évaluations $\sigma_{ALC1}{}^{\star}(l)_t$ de manière approximative selon la formule suivante :

$$\sigma_{ALC1}\,^{\star}(l)_t = \frac{p \cdot \sigma_{ALC1}\,^{\star}(l)_{t-1} + (\pi/2)^{1/2} \cdot |ALCi(l) - ALCi\,^{\star}(l)_{t-1}|}{p + 1}$$

dans laquelle les anciennes évaluations avec t-1 sont indexées et p est un facteur de pondération, pour lequel $p \geq 0$.

**6.** Dispositif selon l'une quelconque des revendications 1 à 5, caractérisé en ce que la deuxième activité (16) calcule les nouvelles quatrièmes évaluations $\sigma_{AGI1}{}^{\star}{}_t$ de manière approximative selon la formule suivante :

$$\sigma_{AGI1}\,^{\star}{}_t = \frac{p \cdot \sigma_{AGI1}\,^{\star}{}_{t-1} + (\pi/2)^{1/2} \cdot |AGIi - AGIi\,^{\star}{}_{t-1}|}{p + 1}$$

dans laquelle p est un facteur de pondération, pour lequel $p \geq 0$.

**7.** Dispositif selon l'une quelconque des revendications 1 à 6, destiné à la classification d'un billet de banque ou d'une pièce de monnaie, caractérisé en ce que le système de chargement (1), destiné à enregistrer les caractéristiques physiques, comporte un groupe de capteurs (4) formé par un nombre (N) de capteurs, chaque capteur mesurant, sur un nombre (L) relativement grand de parties d'image, chaque valeur d'intensité réfléchie du domaine spectral pour le vert, le rouge et l'infrarouge.

**8.** Dispositif selon la revendication 7, caractérisé en ce que les caractéristiques physiques enregistrées sont groupées en tant que vecteurs tridimensionnels mci(l) mesurés pour le traitement ultérieur, la définition $(mci(l))^{\mathsf{T}} = (mci_1(l),$ $mci_2(l), mci_3(l))$, dans laquelle i = 1 jusqu'à N et l = 1 ... L, étant applicable aux vecteurs mci(l), et les composantes avec l'indice 1 contenant des valeurs d'intensité du domaine spectral vert, les composantes avec l'indice 2 les valeurs du domaine spectral rouge et les composantes avec l'indice 3 les valeurs d'intensité du domaine spectral infrarouge.

**9.** Dispositif selon la revendication 8, caractérisé en ce que l'activité de traitement préliminaire (6) calcule les premières composantes des vecteurs caractéristiques locaux ALCi(l) avec

$$ALCi_1(l) = mci_1(l) + mci_2(l) + mci_3(l),$$

les deuxièmes composantes avec

$$ALCi_2(l) = \frac{mci_1(l)}{mci_1(l) + mci_2(l) + mci_3(l}$$

les troisièmes composantes avec

$$ALCi_3(l) = \frac{mci_2(l)}{mci_1(l) + mci_2(l) + mci_3(l}$$

les quatrièmes composantes avec

$$ALCi_4(l) = \frac{mci_1(l)}{\frac{1}{L} \cdot \sum_{j=1}^{L} mci_1(j)},$$

et les cinquièmes composantes avec

$$ALCi_5(l) = \frac{mci_3(l)}{\frac{1}{L} \cdot \sum_{j=1}^{L} mci_3(j)}.$$

# Fig. 1

# Fig. 2

Fig. 3

Fig. 4